# EUROPEAN PATENT APPLICATION

(11) **EP 3 299 984 A1**
(43) Date of publication of application: **28.03.2018**
(21) Application number: 16189839.0
(22) Date of filing: 21.09.2016
(51) Int. Cl.: G06F 21/44, H04L 29/06

(54) **AUTHENTICATION OF A SOFTWARE ENTITY BY ANOTHER SOFTWARE ENTITY**

(71) Applicant: ALCATEL LUCENT, 92100 Boulogne-Billancourt (FR)
(72) Inventor: LACH, Hong-Yon, 91620 NOZAY (FR)
(74) Representative: Cabinet Camus Lebkiri

(57) **Abstract**

There is described a method of verification by a first software entity (A) of the authenticity of a second software entity (B) running on a hosting trustworthy system platform (P) wherein, upon receipt of an authentication request (A.req) from the first software entity, the second software entity obtains from said hosting trustworthy system platform an authenticity proof (AP) associated to said second software entity and then sends it back to the first software entity.

## Description

### BACKGROUND

### Technical Field

The present invention generally relates to the authentication of a software entity. It finds applications, in particular, in computer systems where establishing trust of a software entity may prove necessary to protect the system against potential attacks.

### Related Art

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section.

An application programming interface (API) specifies how an API server offers its services to an API client, so that they can be developed and deployed independently as software components belonging to the same application or different applications.

Since APIs are such an essential business enabler, it has become of significant importance to protect them so that their services and data are not sabotaged or stolen by fake API clients, forged API servers and malicious API eavesdroppers, for instance. In the current state of the art, a secure API is used to allow an API client and an API server to mutually authenticate each other and set-up a secure communication channel between them.

APIs are a tempting attack surface. They are programmable, which facilitates brute-force attacks by bots. They are also mostly based on popular standards such as HTTP, JSON, and XML, whose open-source tools help make attacks more convenient. Thus, API attacks are common and have brought a plethora of data breaches and frauds in various computer systems. Most API vulnerabilities are remediable by adopting best implementation practices, particularly regarding the careful use and processing of API inputs and parameters to protect against attacks such as data injection, cross-site scripting (XSS) and cross-site request forgery (CSRF). In addition, certain API servers also implement API analytics capabilities to help mitigate brute-force and DDoS attacks. From the protocol's perspective, today's exemplary APIs, such as those established by Google and Facebook, adopt HTTPS to encrypt API exchanges and enable an API client to authenticate an API server, in order to protect from man-in-the-middle (MITM) attacks and forged API servers, respectively.

However, a fundamental source of insecurity in today's APIs lies in the lack of effective means for an API server to authenticate an API client, thus allowing fake API clients to steal services and sensitive data. Even if a service is designed to require end-user authentication over its API, API-client authentication does not become less of a problem. Indeed, end-user authentication cannot replace API-client authentication because a fake API client can make effectively a MITM attack to steal end-user authentication credentials.

Accordingly, there remains needs for a reliable process of authenticating a software entity, for example an API-client, upon authentication request by another software entity, namely an API server in the example.

### SUMMARY

To address these needs, a first aspect of the present invention relates to a method of verification by a first software entity of the authenticity of a second software entity running on a hosting trustworthy system platform wherein, upon receipt of an authentication request from the first software entity, the second software entity obtains from said hosting trustworthy system platform an authenticity proof associated to said second software entity and then sends it back to the first software entity.

The solution proposes a practical way for one software entity to authenticate another software entity, which becomes increasingly important for software security but does not yet have any deployed method.

In the solution, the two software entities could run on the same or different trustworthy system platforms. The solution can be used as part of an API for an API server to authenticate an API client. The conventional API key, which is subject to theft, is no longer relied upon for API-client authentication although it may continue being used to serve other purposes.

In one embodiment of the present invention:
a) responsive to the authentication request from the first software entity, the second software entity requests its hosting trustworthy system platform to generate an authenticity proof containing at least one identifier of said second software entity as identified by said trustworthy system platform, and,
b) the second software entity responds to the first software entity's authentication request by sending to said first software entity at least the authenticity proof and a digital certificate identifying its trustworthy system platform;
c) the first software entity verifies the received digital certificate and, provided that the received digital certificate is valid and trusted by the first software entity, the first software entity successfully authenticates the second software entity if the second software entity's identifier carried in the authenticity proof matches the identifier by which the first software entity identifies the second software entity.

Besides the usual potential risks associated with digital certificate and public-key cryptography, the solution's security relies on the robustness of secure-element implementations and trustworthy system platforms.

The trustworthy system platform, which can be an Operating System (OS), knows the digital certificate. It also knows the software identities and signer identities of the code-signed software entities installed and run in it, which is what is meant in the above when referring to "at least one identifier of said second software entity as identified by said trustworthy system platform". In the context of the present description, the term "identifier" refers to any combination of at least one of the software entity's software name, code-signer identity, and any other associated identities. Indeed, the objective of authenticating a software entity is to establish trust of that software entity. Thus, depending on the specific needs of the application, it would require that the software entity is authenticated as a software entity of a particular release, belonging to a particular family of various versions and/or components, code-signed by a particular developer, or any desirable combination of such identity information.

In possible implementations, the second software entity's identifier known by the first software entity and allowing said first software entity to identify said second software entity can carry one or more identities associated with the second software entity, such as its software identity, its code-signer's identity, etc. In addition, the first software entity can thus identify the second software entity by any one of or by a combination of the identities carried by the identifier. Thus, for the second software entity to be successfully verified by the first software entity, the second software entity's identifier shall carry at least all the identities expected by the first software entity.

In some embodiments, the authenticity proof can be signed or encrypted by a secure element of the trustworthy system platform using the private key associated with the digital certificate of said trustworthy system platform, before being sent by the second software entity to the first software entity. The private key associated with the digital certificate of said trustworthy system platform can be stored in the secure element of the trustworthy system platform. The first software entity thus verifies the signed authenticity proof or decrypts the encrypted authenticity proof using the digital certificate of the second software entity's trustworthy system platform to obtain the authenticity proof certified by second software entity's trustworthy system platform.

In one implementation:
- the authentication request sent by the first software entity to the second software entity comprises one or more of first anti-replay protection elements and the authenticity proof generated by the trustworthy system platform hosting the second software element further contains said first anti-replay protection elements obtained from the first software entity, and
- the first software entity successfully authenticates the second software entity if, additionally, a first anti-replay check based on the first anti-replay protection elements carried in the received authenticity proof is passed.

In a variant of the above implementation, or in combination:
- the authenticity proof generated by the trustworthy system platform hosting the second software entity and sent to the first software entity further contains one or more of second anti-replay protection elements produced by the said trustworthy system platform, and
- the first software entity successfully authenticates the second software entity if, additionally, a second anti-replay check based on the second anti-replay protection elements carried in the received authenticity proof is passed.

For example, the first anti-replay protection elements and/or the second anti-replay protection elements can comprise one or more of: a randomly or pseudo-randomly-generated token, and a time stamp.

The first and second software entities can run on the same trustworthy system platform or on different trustworthy system platforms.

In some implementations, the first software entity is an application programming interface (API) server and the second software entity is an API client, or vice versa. It will be appreciated by the one with ordinary skills in the art that the API key is not used for authentication of an API client according to the proposed method.

A second aspect of the present invention relates to a computer program product comprising one or more stored sequences of instructions that are accessible to a processor and which, when executed by the processor, cause the processor to carry out the steps of the method of the first aspect of the present invention.

A third aspect of the present invention relates to a computer system comprising a first software entity and a second software entity running on a hosting trustworthy system platform, and further comprising means configured to carry out the steps of the method of the first aspect.

### BRIEF DESCRIPTION OF THE DRAWINGS

Embodiments of the present invention are illustrated by way of example, and not by way of limitation, in the figures of the accompanying drawings, in which like reference numerals refer to similar elements and in which:
- Figure 1 is a schematic diagram illustrating the client-server model, with clients communicating with a server via a communication network;
- Figure 2 is a (protocol) exchange diagram of an authentication method according to embodiments of the present invention;
- Figure 3 is a flowchart illustrating steps of the method of Figure 2 carried out at the first software entity;
- Figure 4 is a flowchart illustrating steps of the method of Figure 2 carried out at the second software entity; and,
- Figure 5 is a flowchart illustrating steps of the method of Figure 2 carried out at the trustworthy system platform hosting the second software entity.

### DESCRIPTION OF PREFERRED EMBODIMENTS

The well-known client-server model is a distributed application structure that partitions tasks or workloads between the providers of a resource or service, called servers, and service requesters, called clients.

This model describes the relationship of cooperating software components in an application. The server component of the application provides a function or service to one or many client components of said application. The clients initiate requests for such services, which include any resources shared by the server with clients. Said resources comprise any of the server computer's software and electronic components, from programs and data to processors and storage devices, for instance.

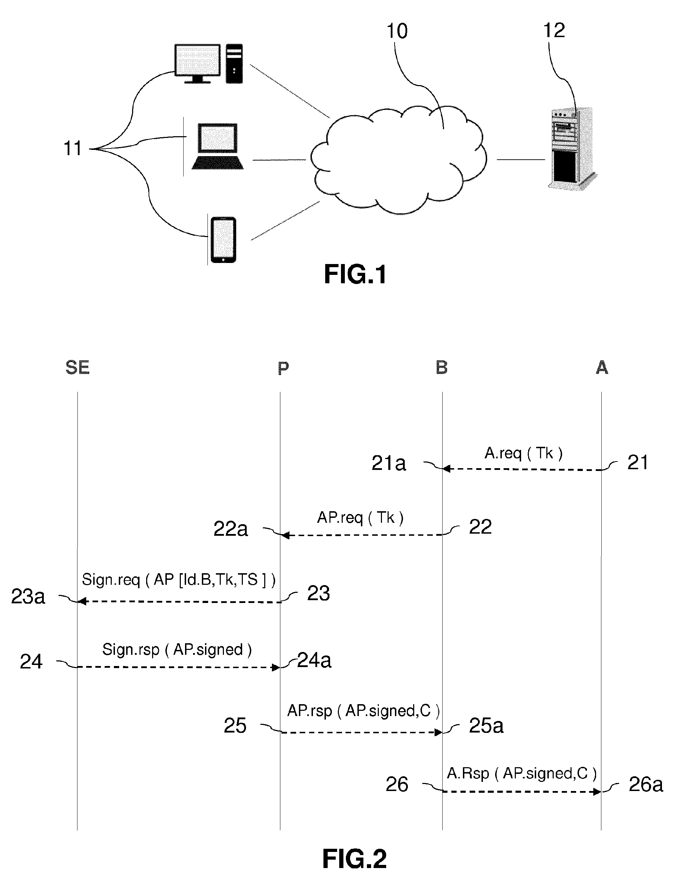

Referring to **Figure 1****,** there is shown therein a schematic diagram illustrating the client-server model, with clients 11 communicating with a server 12 via a communication network 10 such as the World Wide Web, for instance. Often, clients and servers communicate over a computer network on separate hardware, as in the example as shown wherein the clients can include, in particular, a desktop computer, a laptop computer, or a smartphone or any similar communicating device, etc. However, both client and server may also reside in the same system. For instance, client software can communicate with server software within the same computer.

Clients and servers exchange messages in a request-response messaging pattern, wherein the client sends a request and the server returns a response. To formalize the data exchange even further, the server may implement an application programming interface (API). The API is an abstraction layer for such resources as databases and custom software, for instance. By restricting communication to a specific content format, it facilitates parsing. By abstracting access, it facilitates cross-platform data exchange.

An API specifies how an API server offers its services to an API client, so that they can be developed and deployed independently as software components belonging to the same application or different applications. A web application typically employs APIs for its backend server to support its various front-end clients on targeted end-user platforms. Besides, a lot of internet companies establish APIs as a business to provide services to third-party applications. As Internet of Things (IoT), software-defined networking (SDN) and network-function virtualization (NFV) emerge, APIs enable software from different vendors to collaborate, allowing customers to deploy flexible and customized solutions.

When an API customer registers its API client with an API operator, it is given a specific API key (or any equivalent thereof) for the API client to use in making API calls. This measure is intended for the API server to control and manage the provision of its services to the API client. However, this is only a best-effort approach, because the API key is often not secure enough for an API operator to authenticate an API client, nor is there any other effective way for an API operator to verify the authenticity of an API client.

For an API client that runs inside a web browser, for instance, its API key is embedded in downloaded webpages or JavaScripts, and could therefore be easily stolen. In order to try to circumvent this problem, the API server can attempt to identify the API client by looking for the request referral in HTTP headers, However, such headers could be easily spoofed.

In case that an API client is a desktop application, a mobile application or an embedded application running on any user appliances, its API key is embedded in the API client. Nevertheless, malicious parities could code-inspect the API client to steal the API key.

If an API client runs on a server, its API key is generally considered secure because of the assumedly safe enterprise-server environment. Besides, the API server can attempt to identify the API client by its hosting server's globally unique IP address. However, such assumptions are becoming unjustifiable in the cloud era, as more API clients are increasingly running on servers hosted by public cloud service providers. In the cloud, consequently, API keys are less safe and API clients cannot usually be identified by IP addresses.

Actually, API operators systematically advise API customers to keep API keys secret, but there are no effective security measures offered on their side. On the other hand, API customers have difficulty to keep their API keys secure since these keys have to be embedded in the API clients somehow. Even techniques such as obfuscation cannot resist attacks from determined hackers to recover API keys. In case that an API key is compromised, it has to be revoked and the API customer needs to obtain a new API key from the API operator. Subsequently the API customer needs to release a new version of its API client to use the new API key. Due to the lack of API client authentication in an API, such last-resort remedy is often too frequent and too inconvenient for all parties, including API operators, API customers, and end-users.

Given the above-mentioned situation, embodiments of the proposed authentication method, which shall now be described herein, offer an efficient and more reliable solution for having a given software entity authenticated by another, namely different software entity.

The basic idea behind the proposed solution is that it is reasonably reliable for a software entity to have its authenticity certified by its hosting trustworthy system platform upon authentication request from another software entity.

In Figures 2 to 5 and in the corresponding description below, the following references and abbreviations shall be used for enhancing intelligibility:
- A:: a first Software Entity A, for instance an API server;
- B:: a second Software Entity B, for instance an API client;
- P:: B's hosting trustworthy system platform;
- Tk:: anti-replay Token(s);
- TS:: anti-replay Time Stamp(s);
- C:: P's digital certificate;
- SE:: P's secure element;
- Id.B:: B's identifier
- A.req:: Authentication Request message sent by A;
- A.rsp:: Authentication Response message sent back by B;
- AP:: Authenticity Proof of B; depending on the context, the terms "AP" can designate the plain version or the signed (or encrypted) version of B's Authenticity Proof;
- AP.signed:: B's signed (or encrypted) Authenticity Proof;
- AP.req:: Authenticity Proof Request message sent by B;
- AP.rsp:: Authenticity Proof Response message sent back by P;
- Sign.req:: Signature (or encryption) request message sent by P; and,
- Sign.rsp:: Signature (or encryption) response message returned by SE.

Embodiments of the proposed authentication method allow a first software entity A to check the authenticity of a second software entity B running on a hosting trustworthy system platform P.

In one example, the software entities A and B can run on the same trustworthy system platform P. However, this is not a limiting feature of the invention. Indeed, software entities A and B can run on different trustworthy system platforms.

In one example of application, the first software entity is an application programming interface (API) server and the second software entity is an API client. However, the invention is not intended to be restricted to such application of the method. In particular, embodiments of the method can apply to the reverse situation, namely the first software entity can be an API client and the second software entity can be an API server.

Referring to the exchange diagram of Figure 2, the overall authentication process according to embodiments of the present invention will now be described using the above listed acronyms and abbreviations.

The process starts at 21 when software entity A sends an Authentication Request message A.req to software entity B. In some embodiments, the message A.req can include one or more anti-replay protection elements, such as token(s) Tk. Other anti-replay protection elements can include, for instance a Time Stamp. This measure allows an authenticity proof to include anti-replay protection elements to prevent a fraudulent party to steal the authenticity proof for the purpose of replaying same later from another, fake or corrupted software entity, in an attempt to impersonate the software entity for which the authenticity proof was generated. The message A.req is received by B at 21 a.

Responsive to the message A.req, B sends at 22 an Authencicity Proof Request message AP.req to its hosting trustworthy system platform P. In the shown example, the message AP.req includes the token(s) Tk which B received from A in the Authentication Request message A.req, in order to convey this means of anti-replay protection to P. The message AP.req is received by P at 22a.

Upon receipt of the message AP.req, the platform P generates an Authenticity Proof AP of B, which contains the identifier Id.B of B. AP further contains, if present, the anti-replay protection elements Tk received from B within the message AP.req. In some embodiments, AP further includes anti-replay protection elements given by P, for instance one or more time stamps TS. The protection elements Tk and/or TS specifically protect the generated AP against attacks of the replay type.

It shall be appreciated that the authenticity proof AP which is generated by P is, at level of P, a "plain" authenticity proof. In order to enhance security, this plain AP can be signed or encrypted using the private key associated with P's digital certificate.

To that end, P sends a signature (or encryption) request message Sign.req to its secure element SE, at 23. The message Sign.req contains the plain version of AP, which carries B's identifier(s) Id.B, the first anti-replay protection elements Tk received by B from A, if any, and the anti-replay protection elements TS given by P where applicable. The message Sign.req is received by SE at 23a.

The private key associated with P's digital certificate is securely stored inside SE, which carries out a signature or encryption process, whose outcome is a signed or encrypted version, respectively, of the plain AP received by SE from P. This signed/encrypted version of AP is denoted AP.signed in the drawings and in the present description.

A typical signature process which can be used by SE is based on public-key cryptography, such as DSA ("Digital Signature Algorithm") or any one of its variants such as ECDSA ("Elliptic Curve Digital Signature Algorithm"), for instance.

Alternately, SE can implement an encryption algorithm based on public-key cryptography, such as the RSA (from Ron Rivest, Adi Shamir and Leonard Adleman), but using the private key for encryption and the public key for decryption.

At 24, the signed/encrypted authenticity proof AP.signed is sent back by SE to P, within a signature (or encryption) response message Sign.rsp. The message Sign.rsp is received by P at 24a, and thus the signed/encrypted authenticity proof AP.signed which has been generated by SE from the plain authenticity proof AP.

At 25, P sends a Authentication Proof Response message AP.rsp to B, which responds the Authentication Proof Request message AP.req received at 22a. This message AP.rsp contains the signed/encrypted authenticity proof AP.signed obtained from SE, along with P's digital certificate C. At 25a, the response message AP.rsp is received by B.

Finally, at 26, B responds to the authentication request message A.req received at 21 a by sending back to A an authentication response message A.rsp. This message A.rsp contains the signed/encrypted authenticity proof AP.signed and P's digital certificate C. Since software entity A knows software entity B's identifier Id.B, A can authenticate B by said identifier. The received identifier Id.B can be trusted since it is received within a signed or encrypted authenticity proof of B, whose origin is itself based on the received P's digital certificate C and can thus be trusted if the received P's digital certificate C is also trusted by A.

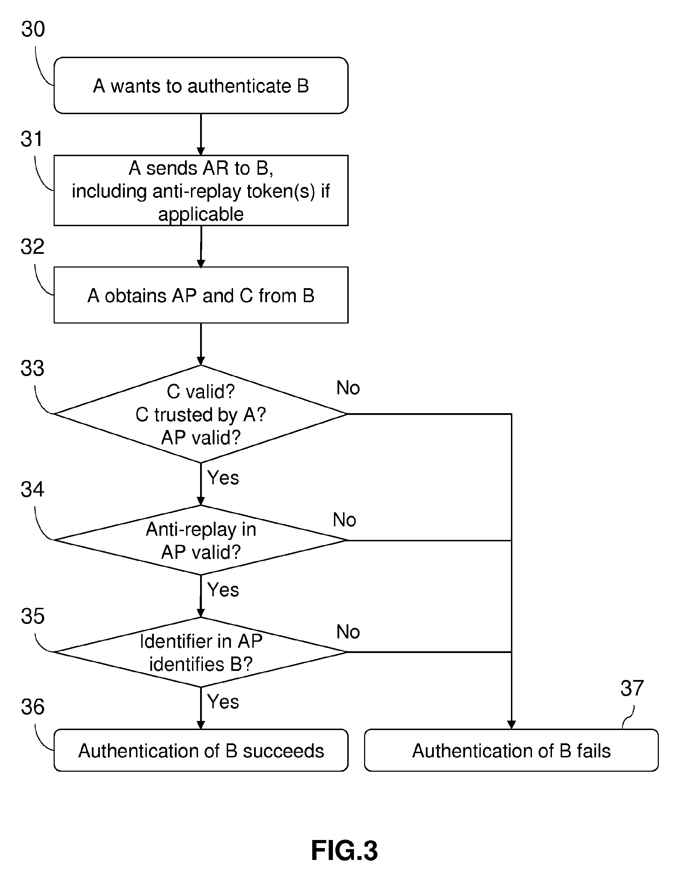

The steps of the method according to the embodiments presented above shall now be described in more details, from the standpoint of A, B and P, successively and with reference to Figures 3, 4 and 5, respectively.

Let us first consider the step diagram of **Figure 3****,** which shows steps of the authentication process according to embodiments, which are carried out on A's side. The process starts at 30, with software entity A being executed and needing to verify the authenticity of software entity B which is running on its hosting trustworthy system platform P.

At 31, A sends the Authentication Request (AR) message to B, said message including anti-replay token(s) in some embodiments. This message corresponds to message A.req(Tk) sent at 21 with reference to Figure 2 which has been described in the foregoing.

At 32, A obtains the signed/encrypted version of the Authencicity Proof AP of B and P's digital certificate C, from B. This data is received within a message which corresponds to message A.Rsp(AP.signed,C) received at 26a with reference to above described Figure 2.

Then the following verification process is carried out by A, and ends-up either by a positive conclusion at 36 that authentication of B succeeds, or by a negative conclusion at 37 that authentication of B fails. In the shown example, this process is composed of three steps for the purpose of the present description, but the one with ordinary skills in the art will appreciate that such presentation is purely illustrative and thus, is not limiting as to practical implementations of embodiments.

At 33, it is first checked whether the digital certificate C received within the message A.Rsp(AP.signed,C) is valid and trusted by A. A verifies that digital certificate C is valid if all certificates in C's certificate chain are valid with respect to issuer's signature, revocation status, validity period, etc. A securely maintains a list of its trusted digital certificates, and therefore A is capable of deciding that it trusts the digital certificate C if any certificate in C's certificate chain is a member of A's list of trusted digital certificates. Further, it is checked whether the Authenticity Proof AP of B is valid, which refers to the fact that the signed or encrypted version AP.signed of AP is correctly verified or decrypted, respectively. If any one of the above check is not passed, then the process ends at 37, meaning that the authentication of B fails.

Else, the process goes on at 34 with the conduction of an additional test to check whether the anti-replay protection element(s), Tk(s) and/or TS(s) received within message A.Rsp(AP.signed,C) is(are) valid. Validity of token(s) is checked by comparison with the token(s) as originally sent by A. Validity of Time Stamp(s) is checked by comparison with timing information issued by a timing reference available at level of A, for instance a clock signal. If the above check of the anti-replay protection element(s) is not passed, then the process ends at 37, meaning that the authentication of B fails.

Else, the process is continued, at 35, by determining whether the identifier Id.B of B received within the message A.Rsp(AP.signed,C) as part of the plain Authenticity Proof AP carries the identity or identities by which A identifies B. If not, then the authentication of B fails and, again, the process ends at 37.

If yes, then the process ends at 36, meaning that the authentication of B succeeds.

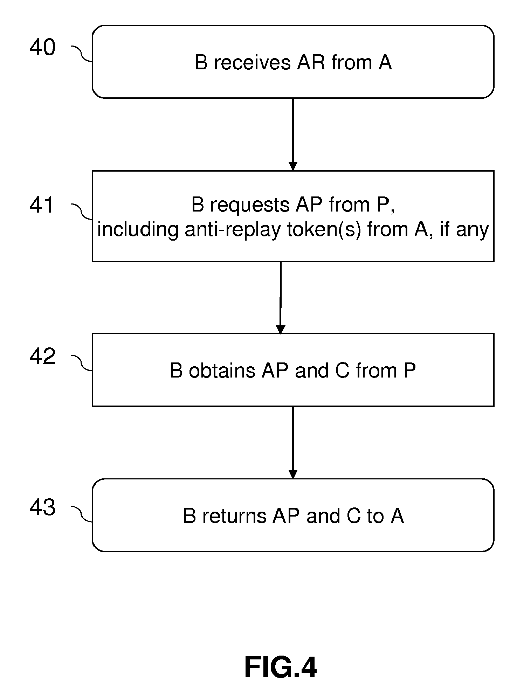

Let us now turn to the step diagram of **Figure 4****,** which illustrates steps of the authentication methods carried out on B's side.

At 40, B receives the authentication request message from A. This message corresponds to message A.Req(Tk) received at 21a in the above described Figure 2. As already mentioned, this message can contain anti-reply protection elements such as one or more tokens Tk(s).

At 41, B requests AP from P, by sending to P the message AP.req(Tk) of Figure 2 (sent at 22). When applicable, namely if anti-replay protection element(s) have been received from A, this message AP.req(Tk) includes said elements.

At 42, B receives the Authencity Proof (AP) of B, more particularly the signed/encrypted version AP.signed thereof, as well as P's digital certificate C, in the example as shown in Figure 2. This, indeed, corresponds to receipt at 25a of message AP.rsp(AP.signed,C).

The last step carried out by B consists in sending back its Authenticity Proof AP, namely the signed/encrypted version AP.signed thereof included in the message A.Rsp(AP.signed,C) as shown in Figure 2, at 26.

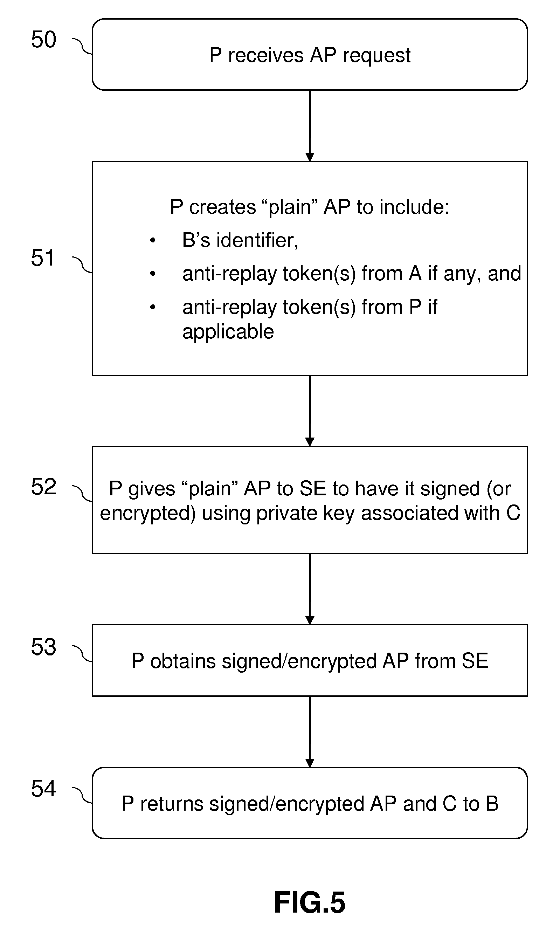

Finally, with reference to the step diagram of **Figure 5****,** the following steps are carried out by P.

At 50, P receives the request for Authenticity Proof from B. With reference to Figure 2, his corresponds to receipt of the message AP.req(Tk) at 22a.

Then, at 51, P creates the plain version of B's Authenticity Proof AP which includes:
- B's identifier Id.B,
- anti-replay token(s) received from A if any, and
- anti-replay token(s) generated by P, in some embodiments.

It will be noted that, preferably, at least one anti-replay token, either received from A or generated by P, is ensured in AP at 51, in order to provide anti-replay protection.

Then, at 52, P passes the plain version of AP to its secure element SE in order to have it signed (or encrypted) using private key associated with C. This corresponds to the sending of request message Sign.req(AP[Id.B,Tk,TS]) at 23, in the above described Figure 2.

In response to said request, P obtains the signed/encrypted version AP.signed of AP from SE, at 53. This corresponds to the receipt of message Sign.rsp(AP.signed) as shown in Figure 2, at 24a.

Finally, at 54, P returns to B the signed/encrypted version of AP along with P's digital certificate C. In the example as shown in Figure 2, this is achieved by P sending back to B the message AP.rsp(AP.signed,C) at 25.

While embodiments of the invention have been described in the above with reference to an API, it will be appreciated that the proposed solution can be used whenever the authentication of any software entity is necessary. Thus, the term API used in the above description shall be understood as encompassing any software interface between two interacting software entities.

The present invention can also be embedded in a computer program product, which comprises all the features enabling the implementation of the methods described herein, and which - when loaded in an information processing system - is able to carry out these methods. Computer program means or computer program in the present context mean any expression, in any language, code or notation, of a set of instructions intended to cause a system having an information processing capability to perform a particular function either directly or after conversion to another language. Such a computer program can be stored on a computer or machine readable medium allowing data, instructions, messages or message packets, and other machine readable information to be read from the medium. The computer or machine readable medium may include non-volatile memory, such as ROM, Flash memory, Disk drive memory, CD-ROM, and other permanent storage. Additionally, a computer or machine readable medium may include, for example, volatile storage such as RAM, buffers, cache memory, and network circuits. Furthermore, the computer or machine readable medium may comprise computer or machine readable information in a transitory state medium such as a network link and/or a network interface, including a wired network or a wireless network, that allow a device to read such computer or machine readable information.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein. Furthermore, an embodiment of the present invention may not include all of the features described above. Therefore, it is intended that the present invention not be limited to the particular embodiments disclosed, but that the invention include all embodiments falling within the scope of the appended claims.

A person skilled in the art will readily appreciate that various parameters disclosed in the description may be modified and that various embodiments disclosed and/or claimed may be combined without departing from the scope of the invention.

Finally, it is stipulated that the reference signs in the claims do not limit the scope of the claims, but are merely inserted to enhance the legibility of the claims.

## Claims

1. A method of verification by a first software entity (A) of the authenticity of a second software entity (B) running on a hosting trustworthy system platform (P) wherein, upon receipt of an authentication request from the first software entity (A), the second software entity (B) obtains from said hosting trustworthy system platform (P) an authenticity proof (AP) associated to said second software entity (B) and then sends it back to the first software entity (A).

2. The method according to claim 1 wherein:
a) responsive to the authentication request from the first software entity (A), the second software entity (B) requests its hosting trustworthy system platform to generate an authenticity proof containing at least one identifier (Id.B) of said second software entity (B) provided and verified by said trustworthy system platform, and,
b) the second software entity (B) responds to the first software entity's authentication request by sending to said first software entity (A) at least the authenticity proof (AP) and a digital certificate (C) identifying its trustworthy system platform (P);
c) the first software entity (A) verifies the received digital certificate and, provided that the received digital certificate (C) is valid and trusted by the first software entity, the first software entity (A) successfully authenticates the second software entity if the second software entity's identifier (Id.B) carried in the authenticity proof matches the identifier by which the first software entity (A) identifies the second software entity (B).

3. The method of anyone of claims 1 and 2 wherein the second software entity's identifier known by the first software entity and allowing said first software entity to identify said second software entity carries one or more identities associated with the second software entity, and wherein the first software entity identifies the second software entity by any one of or by a combination of the identities carried by the identifier.

4. The method of any one of Claims 2 and 3, wherein the authenticity proof is signed or encrypted by a secure element of the trustworthy system platform using the private key associated with the digital certificate of said trustworthy system platform and stored in said secure element of said trustworthy system platform, before being sent by the second software entity to the first software entity, and the first software entity verifies the signed authenticity proof or decrypts the encrypted authenticity proof using the digital certificate of the second software entity's trustworthy system platform to obtain the authenticity proof certified by second software entity's trustworthy system platform.

5. The method of any one of Claims 2 to 4 wherein:
- the authentication request sent by the first software entity (A) to the second software entity (B) comprises one or more of first anti-replay protection elements and the authenticity proof generated by the trustworthy system platform (P) hosting the second software element (B) further contains said first anti-replay protection elements obtained from the first software entity (A), and
- the first software entity (A) successfully authenticates the second software entity (B) if, additionally, a first anti-replay check based on the first anti-replay protection elements carried in the received authenticity proof is passed.

6. The method of any one of Claims 2 to 5 wherein:
- the authenticity proof generated by the trustworthy system platform hosting the second software entity (B) and sent to the first software entity (A) further contains one or more of second anti-replay protection elements produced by said trustworthy system platform, and
- the first software entity (A) successfully authenticates the second software entity if, additionally, a second anti-replay check based on the second anti-replay protection elements carried in the received authenticity proof is passed.

7. The method of any one of Claims 5 and 6 wherein the first anti-replay protection elements and/or the second anti-replay protection elements comprise one or more of randomly or pseudo-randomly-generated token (Tk) and time stamp (TS).

8. The method of anyone of Claims 1 to 7, wherein the first and second software entities (A,B) run on the same trustworthy system platform.

9. The method of anyone of Claims 1 to 7, wherein the first and second software entities (A,B) run on different trustworthy system platforms.

10. The method of anyone of the preceding claims, wherein the first software entity is an application programming interface, API, server and the second software entity is an API client, or vice versa.

11. A computer program product comprising one or more stored sequences of instructions that are accessible to a processor and which, when executed by the processor, cause the processor to carry out the steps of the method of of any of Claims 1 to10.

12. A computer system comprising a first software entity (A) and a second software entity (B) running on a hosting trustworthy system platform (P), and further comprising means configured to carry out the steps of the method of any one of Claims 1 to 12.
